Europäisches Patentamt

European Patent Office

Office européen des brevets

(19)

(11) **EP 0 770 860 A2**

(12) **EUROPÄISCHE PATENTANMELDUNG**

(43) Veröffentlichungstag:
**02.05.1997 Patentblatt 1997/18**

(51) Int. Cl.⁶: **G01H 1/00**, G01H 1/14

(21) Anmeldenummer: **96115776.5**

(22) Anmeldetag: **02.10.1996**

(84) Benannte Vertragsstaaten:
**DE FR GB**

(30) Priorität: **25.10.1995 DE 19539633**

(71) Anmelder: **Heraeus Instruments GmbH**
**63450 Hanau (DE)**

(72) Erfinder:
• **Koch, Michael**
**37520 Osterode (DE)**

• **Uhlendorf, Rüdiger**
**37127 Niemetal (DE)**
• **Jaeckel, Ingo, Dr.**
**37534 Badenhausen (DE)**

(74) Vertreter: **Kühn, Hans-Christian**
**c/o Heraeus Holding GmbH**
**Abt. Schutzrechte**
**Heraeusstrasse 12-14**
**63450 Hanau (DE)**

(54) **Verfahren und Vorrichtung zur Ermittlung einer Unwucht sowie Anwendung der Vorrichtung**

(57) Zur Ermittlung einer Unwucht eines mittels Antriebseinrichtung (3) in Drehung versetzten Rotors (1) werden durch Unwucht hervorgerufene Auslenkungen oder Beschleunigungen der gegenüber einem Gehäuse (7) federnd befestigten Antriebseinrichtung (3) von einem damit mechanisch verbundenen Sensor (5) erfaßt und als elektrisches Signal an eine Auswerteeinrichtung (6) weitergeleitet; als Sensor (5) ist entweder ein piezoelektrischer Kristall zur Erfassung von Beschleunigungen der Antriebseinheit (3) infolge Unwucht oder ein Wege Sensor zur Erfassung von Auslenkungen der Antriebseinheit (3) gegenüber dem Gehäuse (7) infolge Unwucht vorgesehen; das Signal wird in Abhängigkeit von der Drehzahl des Rotors (1) mittels einem adaptiven Bandfilter (11) bewertet. Das Verfahren ist insbesondere zur Ermittlung der Unwucht beim Betrieb von Laborzentrifugen geeignet, wo beispielsweise eine Unwucht durch Bruch von Proberöhrchen auftreten kann.

Figur 1

EP 0 770 860 A2

**Beschreibung**

Die Erfindung betrifft ein Verfahren zur Ermittlung einer Unwucht eines mittels Antriebseinrichtung in Drehung versetzten Rotors, wobei dessen Unwucht durch einen mit der Antriebseinrichtung mechanisch verbundenen Sensor bei Überschreiten einer vorgegebenen Bewegung der Antriebseinrichtung ermittelt und zur Auswertung weitergeleitet wird, sowie eine Vorrichtung und Verwendung einer Vorrichtung.

Aus der DE 87 08 266 U1 ist es bekannt, die Unwucht eines mittels Antriebseinrichtung in Drehung versetzten Rotors einer Zentrifuge zu ermitteln, wobei durch Unwucht hervorgerufene Auslenkungen oder Beschleunigungen der Antriebseinrichtung von einem mit ihr mechanisch verbundenen Sensor bei Überschreiten einer vorgegebenen Bewegung ermittelt und als elektrisches Signal an eine Auswerteeinrichtung weitergeleitet werden; hierzu ist ein in wenigstens einer Richtung senkrecht zur Drehachse des Rotors beweglich an einer Abstützvorrichtung angeordneter Trägerschwenkkörper vorgesehen, der eine elektrisch leitende Oberfläche aufweist und in dessen Bewegungsbahn eine elektrisch leitende Kontaktmetallfläche relativ zur Abstützvorrichtung fest angeordnet ist, wobei der Schwenkkörper in der Ruhelage einen radialen Abstand zur Kontaktfläche besitzt. Der Trägerschwenkkörper wird dabei in einer elastischen Halterung entweder hängend oder auf einer Basis stehend mit der Abstützvorrichtung befestigt.

Weiterhin ist aus der US 54 12 985 die Überwachung von Vibrationen rotierender Vorrichtungen bekannt, wobei Amplitude und Phase der Vibration des rotierenden Körpers mittels einer Sensorvorrichtung mit adaptivem Bandfilter auf der Basis der Drehgeschwindigkeit ermittelt werden.

Aus der EP 0 455 878 A3 ist eine Laboratoriumszentrifuge bekannt, die ein Schaltelement aufweist, das zusammen mit einem an einer Antriebseinheit befestigten Unwuchtelement eine Einheit bildet, wobei Unwuchtbewegungen sich in großen Auslenkungen der Antriebseinheit auswirken und ein Behälter mit einem darin befindlichen Schaltfluid eine elektrische Übertragungsstrecke durch Auslenkung öffnet, bzw. schließt und somit ein Schaltsignal für die bestehende Unwucht abgibt.

Weiterhin ist aus der DE 31 41 684 A1 eine Einrichtung zur Begrenzung von Unwuchten in Waschvollautomaten bekannt, wobei eine in tiefer Resonanz gedämpft schwingende Quecksilberperle bei Erreichen der maximal zulässigen Unwucht eine Kontaktierung mit einem Stift auslöst, womit bei Erreichen der Grenzunwucht eine absolut zuverlässige Umschaltung der Antriebselemente erfolgt.

Auch wenn es nach den bekannten Unwuchterkennungsverfahren möglich ist, eine durch Unwucht hervorgerufene hohe Auslenkung von Rotoren im unteren Drehzahlbereich durch mechanische, bzw. elektronische Sensoren auf einfache Weise zu erfassen, treten Schwierigkeiten bei höheren Drehzahlen auf, bei denen beispielsweise in Zentrifugen für Laborzwecke Gefäßbrüche bzw. Rupturen entstehen können; bei hohen Drehzahlen können mechanische Sensoren keine ausreichenden Amplituden ausbilden, da die vom Rotor ausgehende Kreiselprozession den Abstand der Auslenkung sowohl vergrößern oder als auch verkleinern können und somit entweder eine vorzeitige oder gar keine Unwuchtauslösung erfolgt; darüberhinaus ist auch ein hoher Justageaufwand bei mechanischen Unwuchtsensoren erforderlich.

Ausgehend von bekannten Unwuchterkennungsverfahren, bzw. Sensoren stellt sich die Erfindung die Aufgabe, eine Unwuchterkennung über den gesamten Drehzahlbereich einer Vorrichtung mit einem Rotor - beispielsweise einer Zentrifuge - zu gewährleisten. Dabei soll insbesondere eine Unwuchterkennung bei hohen Drehzahlen - z.B. durch Glasbruch von Laborröhrchen in der Zentrifuge - mit hoher Sicherheit erkannt werden soll, darüberhinaus soll eine ständige Eigenkontrolle der Sensorvorrichtung erfolgen und bei deren Ausfall ein sofortiges Warnsignal sowie ggf. ein Abschalt-Signal ausgegeben werden; weiterhin soll eine Verwendung des Verfahrens angegeben werden.

Die Aufgabe wird verfahrensgemäß durch die kennzeichnenden Merkmale des Anspruchs 1 gelöst.

Als Bewegung der Antriebseinheit wird einerseits die mittels piezoelektrischem Kristall ermittelte Beschleunigung der durch elastische Trägerelemente gehaltenen Antriebseinheit infolge Unwucht, andererseits die mittels Wege-Sensor ermittelte Auslenkung der elastisch aufgehängten Antriebseinheit gegenüber dem Gehäuse definiert.

Als besonders vorteilhaft erweist sich eine einfache Kalibrierung in der Fertigung, da die Grundeinstellung die Kalibration ohne Abgleich durch zwei Probeläufe (einmal Normallauf, einmal Unwuchtlauf) eingestellt werden kann; weiterhin ist eine hohe Eigensicherheit zu erzielen, da bei fehlender Unwuchterkennung ein sofortiges Abschalten bzw. sofortige Warnsignalausgabe ermöglicht wird.

Vorteilhafte Ausgestaltungen des Verfahrens sind in den Ansprüchen 2 bis 7 angegeben; dabei ist es besonders wichtig, daß die Drehfrequenz des Rotors einem adaptiven Bandpaßfilter als Mittenfrequenz zugeführt wird.

Die Aufgabe wird vorrichtungsgemäß durch die kennzeichnenden Merkmale des Anspruchs 8 gelöst.

Hierbei erweist sich die verhältnismäßig einfache Ausstattung als besonders vorteilhaft, da die Drehzahlermittlung mittels Sensor bei modernen Zentrifugen ohnehin zur Verfügung steht und somit nur eine geringfügige Ergänzung der Schaltungsanordnung erforderlich ist.

Vorteilhafte Ausgestaltungen der Vorrichtung sind in den Ansprüchen 9 bis 15 angegeben, wobei gemäß Anspruch 12 ein digitaler Filter als adaptiver Bandpaßfilter sich aufgrund seiner einfachen Einstellbarkeit als besonders vorteilhaft erweist.

Die Aufgabe wird anwendungsgemäß nach Anspruch 16 durch Verwendung einer erfindungsgemäßen Vorrichtung bei Laborzentrifugen gelöst.

Im folgenden ist der Gegenstand anhand der Figuren 1 bis 3 näher erläutert.

Die Figur 1 zeigt schematisch die wesentlichen Bauelemente einer üblichen Labor-Zentrifuge mit ihrem schematisch dargestellten Gehäuse, sowie die zugehörige Schaltungsanordnung, wobei ein Sensor zur Erfassung von Beschleunigungen infolge Unwucht des Rotors eingesetzt ist.

Figur 2 zeigt eine ähnliche Anordnung, wie sie in Figur 1 dargestellt ist, wobei jedoch anstelle eines Sensors zur Erfassung von Beschleunigungen ein Wege-Sensor eingesetzt ist, der Lageänderungen zwischen Rotor und Gehäuse aufgrund einer Rotor-Unwucht ermittelt.

Figur 3 zeigt eine ähnliche Anordnung wie in Figur 1, allerdings sind hier die bisher diskret dargestellten Bauelemente der Auswerteschaltung bzw. deren Funktion durch Verarbeitung codierter Signale in einem speicher-programmierbaren Digital-Rechner ersetzt; wobei dies bedeutet, daß die Bauelemente und ihre Funktion durch Rechenprogramme bzw. Software dargestellt sind.

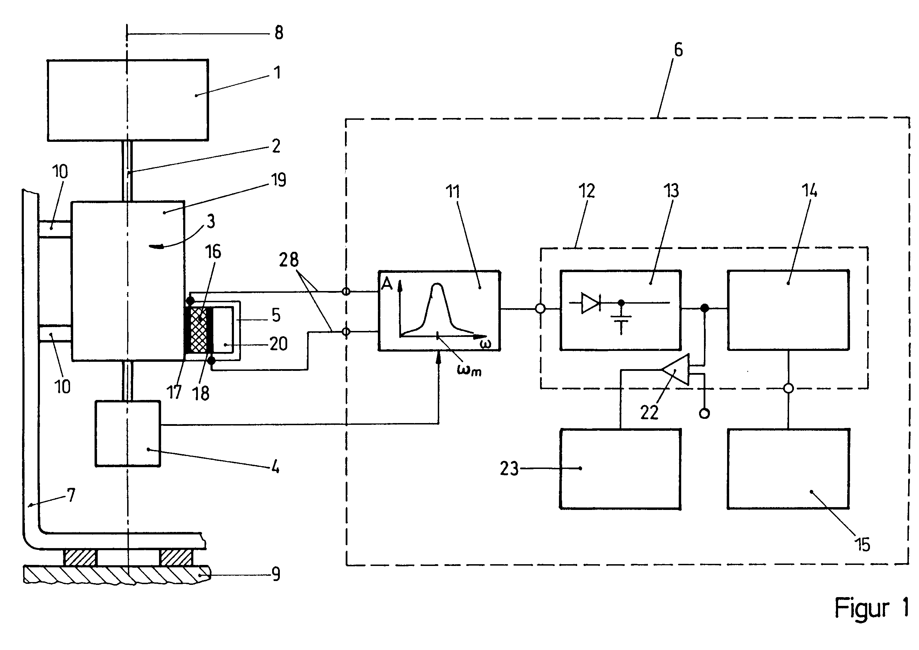

Gemäß der Figur 1 sind Rotor 1, die mit der Rotorwelle 2 verbundene Antriebseinrichtung 3 zusammen mit Drehzahlsensor 4 und Beschleunigungssensor 5 sowie der als Blockschaltbild gezeigten elektrischen Schaltungsanordnung 6 in einem hier nur teilweise bruchstückhaft dargestellten Zentrifugen-Gehäuse 7 angeordnet, das auf einer ortsfesten Unterlage 9 ruht. Die Antriebseinrichtung 2 ist zur Halterung über hier nur schematisch dargestellte elastisch verformbare Trägerelemente 10 - beispielsweise Gummipuffer - mit dem Gehäuse 7 verbunden. Die entlang der Rotorwelle 2 verlaufende Rotorachse ist als unterbrochene Linie dargestellt und mit Ziffer 8 bezeichnet.

Zur Ermittlung einer eventuellen Unwucht im Bereich des Rotors 1 ist die Antriebseinrichtung 3 mechanisch fest mit dem Beschleunigungssensor 5 verbunden, der als Piezo-Kristall ausgebildet ist und auf ihn wirkende Kräfte in elektrische Signale umsetzt; der Piezokristall 16 ist von zwei sich gegenüberliegenden Elektroden 17, 18, zur Messung der Piezospannung umgeben und mit dem Gehäuse 19 der Antriebseinrichtung 3 fest verbunden, wobei auf der der Antriebseinrichtung 3 abgekehrten Seite ein Massen-Element 20 mit der Oberfläche des Piezokristalls bzw. der Elektrode 18 zur Aufbringung der durch Unwucht hervorgerufenen mechanischen Kräfte verbunden ist; gleichzeitig ist die Rotorachse 2 mit einem Drehzahlgeber, bzw. Tachogenerator als Drehzahlsensor 4 verbunden, so daß eine drehzahlabhängige Bewertung der Beschleunigung aufgrund einer Unwucht vorgenommen werden kann; das Signal der Drehzahl der Antriebseinrichtung wird einem adaptiven Bandpaßfilter 11 als Steuersignal zugeführt, auf dem in der schematischen Darstellung der Kennlinie die Drehzahl bzw. Winkelgeschwindigkeit

entlang der $\omega$-Achse aufgetragen ist, während die vom Sensor ermittelte Auslenkung oder Beschleunigung in Form von Spannungssignalen dem Bandpaßfilter 11 zugeführt wird; die Verstärkung A des Filters bzw. das Amplitudenverhältnis Ausgangs- zu Eingangsamplitude ist als Funktion der Drehzahl bzw. Winkelgeschwindigkeit $\omega$ aufgetragen. Es handelt sich somit um ein Bandpaßfilter 11 mit variabler Mittenfrequenz $f_m = \omega_m/2\pi$.

Der Ausgang des adaptiven Bandpaßfilters 11 ist mit einer Auswerteschaltung 12 verbunden, an deren Eingang ein Gleichrichter 13 liegt, dessen Ausgang mit dem Eingang eines Differenziergliedes 14 verbunden ist, um plötzliche Änderungen der Amplitude des Signals zuverlässig und automatisch zu erkennen. Am Ausgang des Differenziergliedes 14 ist ein Warnmeldungsgeber, bzw. ein Schaltelement angeschlossen, welches neben einer akustischen oder optischen Vorwarnung mittels Schalteinrichtung 15 auch selbst eine Abschaltfunktion wahrnehmen kann.

Weiterhin ist zur Kontrolle von Sensor 5 und seiner Verbindung 28 zur Schaltungsanordnung 6 an Gleichrichter 13 der Auswerteeinheit 12 ein Komparator 22 mit seinem ersten Eingang angeschlossen, welcher die aufgrund fertigungsbedingter Unwucht-Toleranzen von Rotor 1 und Antriebseinheit 3 mittels Sensor 5 ermittelte Grundschwingung durch Vergleich mit einem Referenz-Signal an seinem zweiten Eingang überwacht; der Ausgang des Komparators 22 ist mit einer Alarm- und Abschalteinrichtung 23 verbunden, welche bei Ausfall des Grundschwingungs-Signals mittels Stellsignal betätigt wird.

Als besonders wichtig hat sich die Warnfunktion im Hinblick auf gefährliche Probeinhalte bei Labor-Zentrifugen erwiesen, da bei Bruch von Proberöhrchen das Bedienungspersonal vorzeitig gewarnt werden kann.

Weiterhin ist ein besonderer Vorteil darin zu sehen, daß eine Bewertung der Auslenkung des Sensors in Abhängigkeit von der Drehzahl vorgenommen werden kann, so daß verhältnismäßig große Auslenkungen, wie sie im Anlaufbetrieb im kritischen Drehzahlbereich der Zentrifuge auftreten können, keinerlei Alarm auslösen können.

Das Verfahren wird nachstehend kurz erläutert.

Bei normalem Zentrifugenbetrieb dreht sich Rotor 1 infolge des Antriebs mittels Antriebseinrichtung 3, wobei gleichzeitig die Drehzahl $\omega$ mittels Drehzahlsensor 4 ermittelt und dem adaptiven Bandpaßfilter 11 als Steuersignal zugeführt wird; in der Praxis hält der Rotor 1 in der Regel eine Drehzahl von 3000 Umdrehungen/Minute aufrecht, welches bei einem Dreiphasen-Asynchronmotor einer durch Unwucht erzeugten Schwingfrequenz von 50 Hertz entspricht. Gleichzeitig ermittelt der Sensor 5 eventuelle Auslenkungen oder Beschleunigungen der gegenüber Gehäuse 7 mittels elastischer Trägerelemente 10 federnd aufgehängten Antriebseinrichtung 3 infolge Unwucht durch Glasbruch von Proberöhrchen innerhalb des Rotors 1 bzw. auch Resonanzerscheinungen beim Hochlaufen im Zentrifugenbetrieb. Mit zunehmender Drehzahl verschiebt sich auch die Schwingfrequenz von 0 auf beispielsweise einen Wert von 50 Hertz, was einer Motordrehzahl von 3000 Umdrehungen/Minute entspricht. Während des normalen Betriebes erfaßt der Sensor aufgrund fertigungsbedingter Unwucht-Toleranzen eine sogenannte Grundschwingungs-Amplitude als Signal, welches die ordnungsgemäße Bereitschaft der Sensoreinrichtung signalisiert. Bei Rotoren, die mit Proberöhrchen bestückt sind, treten infolge der Unwucht des Rotors 1 erhebliche Beschleunigungen auf die Antriebseinheit 3 auf, welche vom Sensor 5 erfaßt und in elektrische Spannungs-Signale umgewandelt werden. Diese werden über Zuleitung 28 dem adaptiven Bandpaßfilter 11 zugeführt, dessen Filtercharakteristik, d.h. das Verhältnis Ausgangs- zu Eingangsamplitude A in Abhängigkeit von Drehzahl ω veränderbar ist; nach Durchlaufen des Bandpaßfilters 11 werden die elektrischen Signale der Auswerteeinheit 12 zugeführt, wobei die Signal-Amplitude mittels Gleichrichter 13 in einen Spannungswert umgewandelt wird, der als Maß für die Unwucht, bzw. auch zur Darstellung des Betriebsbereitschaftszustandes dient; das gleichgerichtete Signal wird an das Differenzierglied 14 weitergeleitet; wenn das gleichgerichtete Signal in seiner Amplitude annähernd gleichbleibt, wird im Differenzierglied 14 keine Veränderung registriert und der Wert 0 an die sich anschließende Alarm- und Abschalteinrichtung 15 abgegeben. Ändert sich dagegen infolge Glasbruchs die Unwucht der Antriebseinrichtung, wird diese Unwucht durch Änderung der von Sensor 5 und Gleichrichter 13 abgegebenen Signal-Amplitude erkannt und als Ausgangswert zur Auslösung eines Alarmsignals abgegeben. Das von Differenzierglied bereitgestellte Auslösesignal wird der Alarm- und Abschalteinrichtung 15 zugeführt, die ggf. auch eine Abschaltung der Antriebseinrichtung des Rotors vornimmt.

Ein ähnlicher Effekt wird beispielsweise bei Unterbrechung der von den Elektroden des Piezo-Kristalls zum Bandpaßfilter 11 führenden Leitung 28 erzielt, da eine Unterbrechung des ständig vom Sensor 5 abgegebenen Signals von einem dem Gleichrichter 13 nachgeschalteten Komparator 22 erkannt wird und sofort ein Stellsignal zur Alarm- und Abschalteinrichtung 23 weitergegeben wird, so daß die Bedienungsperson über den Gerätezustand informiert wird und ggf. eine Abschaltung der Antriebseinrichtung 3 ausgelöst wird.

Als besonders vorteilhaft erweist es sich somit, daß die Betriebsbereitschaft der Unwuchterkennung ständig überwacht wird und somit eine hohe Eigensicherheit in der Praxis erreicht wird.

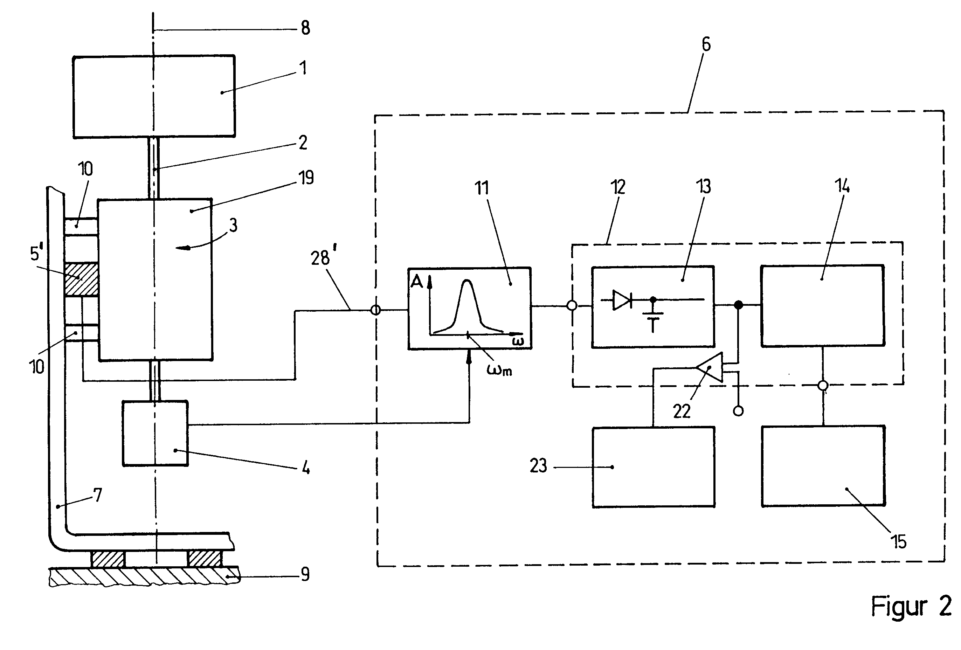

Gemäß Figur 2 ist es möglich, als Sensor einen sogenannten Wege Senor 5' einzusetzen, der mit einem Ende an der Antriebseinrichtung 3 und mit seinem anderen Ende am Gehäuse 7 des bruchstückhaft dargestellten Gesamtgerätes befestigt ist; Lageänderungen aufgrund Rotorunwucht wirken sich als Abstandsänderungen zwischen Gehäuse 7 und der durch elastische Trägerelemente 10 federnd aufgehängten Antriebseinheit 3 aus, die durch den Wegesensor 5' - beispielsweise auf optoelektronischer Basis - erfaßt und in ein elektrisches Signal umgewandelt werden; die Weiterverarbeitung des Signals erfolgt in gleicher Weise, wie bereits zu Figur 1 erläutert, über Zuleitung 28' mittels nachgeschaltetem adaptivem Bandfilter 11 und Auswerteschaltung 12, an die die Alarm- und Abschalteinrichtungen 15 und 23 angeschlossen sind.

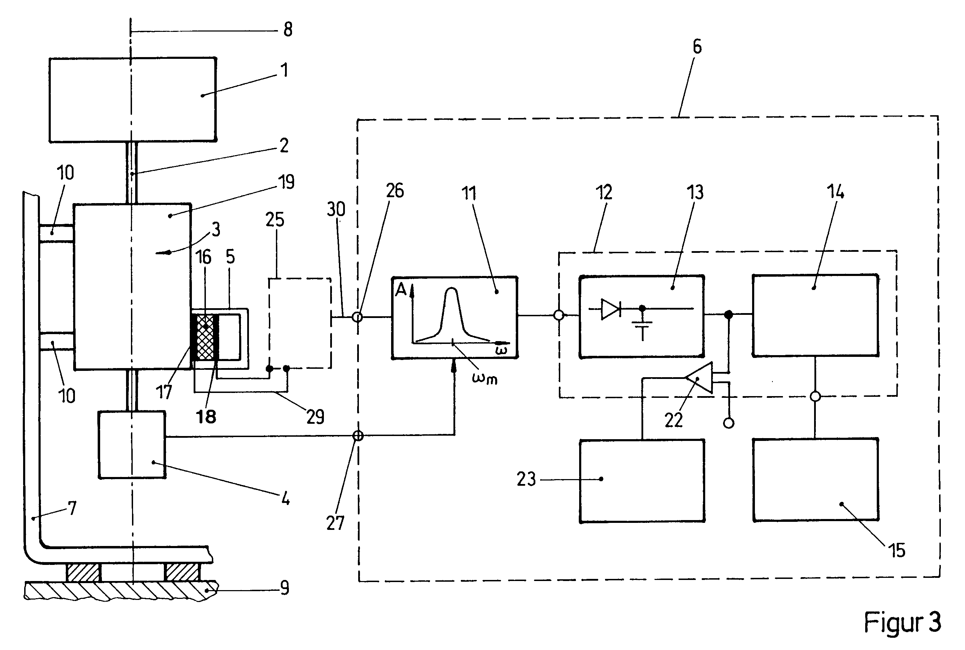

Gemäß Figur 3 ist es weiterhin möglich, die Schaltungsanordnung 6 nach Figur 1 durch einen programmgesteuerten digitalen Rechner zu ersetzen, wobei dann an Sensor 5 sich über Zuleitung 29 ein Analog-Digitalwandler 25 anschließt, der die im Sensor 5 erzeugten Spannungssignale in Digitalwerte umwandelt und diese über Zuleitung 30 dem Eingang 26 der als programmierbarem Digital-Rechner ausgebildeten Schaltungsanordnung 6 zuführt; weiterhin wird die mittels optoelektronischem Drehzahlsensor 4 erzeugte Impulsfolge über Eingang 27 der als Rechner ausgebildeten Schaltungsanordnung 6 zugeführt, wobei die bisherigen Bauelemente, wie adaptiver Bandpaßfilter 11, Gleichrichter 13, Differenzierglied 14, Alarm- und Schalteinrichtung 15 bzw. Komparator 22 und Alarm- und Schalteinrichtung 23 durch Programmierung des Rechners dargestellt sind.

Es ist weiterhin auch möglich, die anhang Figur 2 erläuterte Anordnung mit einem programmierbaren Digital-Rechner, wie er in Figur 3 dargestellt ist, zu versehen, wobei dann ein auf optoelektronischer Basis erfaßtes Wegesignal der Abstandsänderung zwischen Gehäuse 7 und der mittels elastischer Trägerelemente 10 federnd aufgehängten Antriebseinheit dem Analog-Digitalwandler 25 zugeführt und mittels Zuleitung 30 dem Eingang 26 der als programmierbarer Digitalrechner ausgebildeten Schaltungsanordnung zugeführt wird.

**Patentansprüche**

1.  Verfahren zur Ermittlung einer Unwucht eines mittels Antriebseinrichtung in Drehung versetzten Rotors (1) einer Zentrifuge, wobei dessen Unwucht durch einen mit der Antriebseinrichtung (3) mechanisch verbundenen Sensor (5, 5') bei Überschreiten einer vorgegebenen Bewegung der Antriebseinrichtung ermittelt und zur Auswertung weitergeleitet wird, wobei durch Unwucht hervorgerufene Auslenkungen oder Beschleunigungen der Antriebseinrichtung (3) von dem Sensor erfaßt und als elektrisches Signal an eine Auswerteeinrichtung weitergeleitet werden, dadurch gekennzeichnet, daß das Signal des Sensors (5,5') in Abhängigkeit von der Drehzahl des Rotors bewertet wird, wobei ein der Drehzahl entsprechendes Signal einem adaptiven Band-Filter für das Signal des Sensors als Mittenfrequenz zugeführt wird, die Signal-Amplitude mittels Gleichrichter (13) in einen Spannungswert umgewandelt wird und das gleichgerichtete Signal einem Differenzierglied (14) zugeführt wird, woraus bei Änderung des Spannungswertes ein Auslöse-Signal zu einer Warn- und/oder Abschalteinrichtung (15, 23) abgeleitet wird.

2. Verfahren nach Anspruch 1, dadurch gekennzeichnet, daß Beschleunigungen infolge Unwucht durch einen piezoelektrischen Kristall als Sensor (5) erfaßt werden.

3. Verfahren nach Anspruch 1, dadurch gekennzeichnet, daß Auslenkungen infolge Unwucht durch einen Wege-Sensor (5') erfaßt werden.

4. Verfahren nach einem der Ansprüche 1 bis 3, dadurch gekennzeichnet, daß das Signal der Drehzahl aus der Stromversorgung der Antriebseinrichtung abgeleitet wird.

5. Verfahren nach einem der Ansprüche 1 bis 3, dadurch gekennzeichnet, daß das Signal der Drehzahl photoelektrisch ermittelt wird.

6. Vorrichtung zur Ermittlung einer Unwucht eines mittels Antriebseinrichtung in Drehung versetzten Rotors einer Zentrifuge mit Ausgabeeinrichtung für ein Warn- und/oder Abschaltvorrichtung, wobei die Antriebseinrichtung (3) zur Ermittlung von Wegen oder Beschleunigungen aufgrund einer Rotor-Unwucht mit einem Wege- oder Beschleunigungs-Sensor (5, 5') in Verbindung steht, der mit dem Eingang einer Auswerteeinrichtung (12) verbunden ist, an deren Ausgang sich die Ausgabeeinrichtung anschließt, dadurch gekennzeichnet, daß die Antriebseinrichtung (3) einen Elektromotor zur Drehung des Rotors (1) aufweist, dessen Drehzahl als elektrisches Steuersignal einem zwischen Sensor (5, 5') und Auswerteeinrichtung (12) geschalteten adaptiven Filter (11) zugeführt wird, wobei die Signal-Auswerteeinrichtung (12) einen Gleichrichter (13) aufweist, dessen Ausgang mit einer Schaltungsanordnung (14) zur Ermittlung der zeitlichen Änderungen des vom Gleichrichter abgegebenen Signals verbunden ist.

7. Vorrichtung nach Anspruch 14, dadurch gekennzeichnet, daß zur Ermittlung der zeitlichen Änderung ein Differenzierglied (14) eingesetzt ist.

8. Vorrichtung nach Anspruch 8, dadurch gekennzeichnet, daß als Sensor (5) ein Piezo-Kristall zwischen Antriebseinrichtung (3) und einem Massenelement (20) eingesetzt ist, welches durch Beschleunigung hervorgerufene mechanische Kräfte in ein elektrisches Signal umwandelt.

9. Vorrichtung nach Anspruch 8, dadurch gekennzeichnet, daß als Sensor (5') ein Wege-Sensor zur Erfassung von Abstandsänderungen zwischen der Antriebseinrichtung (3) und einem äußeren Gehäuse (7) auf photoelektrischer Basis infolge Rotor-Unwucht eingesetzt ist.

10. Vorrichtung nach Anspruch 11, dadurch gekennzeichnet, daß als adaptives Filter (11) ein digitales Filter eingesetzt wird.

Figur 1

Figur 2

Figur 3